**Europäisches Patentamt**

**European Patent Office**

**Office européen des brevets**

(19)

(11) **EP 1 211 682 A2**

(12) **EUROPEAN PATENT APPLICATION**

(43) Date of publication:
**05.06.2002 Bulletin 2002/23**

(51) Int Cl.[7]: **G11B 20/14**, G11B 20/10,
G11B 27/30

(21) Application number: **01309755.5**

(22) Date of filing: **20.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Kuribayashi, Hiroki, c/o Pioneer Corporation Tsurugashima-shi, Saitama-ken (JP)**<br>• **Miyanabe, Shogo, c/o Pioneer Corporation Tsurugashima-shi, Saitama-ken (JP)** |
| (30) Priority: **28.11.2000 JP 2000361529** | (74) Representative: **Haley, Stephen et al**<br>**Gill Jennings & Every,**<br>**Broadgate House,**<br>**7 Eldon Street**<br>**London EC2M 7LH (GB)** |
| (71) Applicant: **Pioneer Corporation**<br>**Tokyo-to (JP)** | |

(54) **Data recording / reproduction method and apparatus using random series for scrambling input data**

(57)     When the present invention is applied to a DVD recording apparatus, a data-frame generation circuit(1) puts input user data into frames and a scramble circuit (2) scramble the data using M-series, then an ECC block construction unit(3) constructs ECC blocks and a RLL (1, 7) modulation unit(4) performs RLL modulation to generate recording data. In addition, in the scramble circuit(2), a M-series generation circuit(21) generates a preset M-series and a conversion circuit(22) selectively converts this M-series to different random series based on recording position data for the position on the disk, then an EXOR circuit(23) takes the exclusive OR of the input data and the converted random series to scramble the input data, making it possible to perform highly reliable scrambling with little correlation between pairs of adjacent tracks on the disk.

FIG. 1

## Description

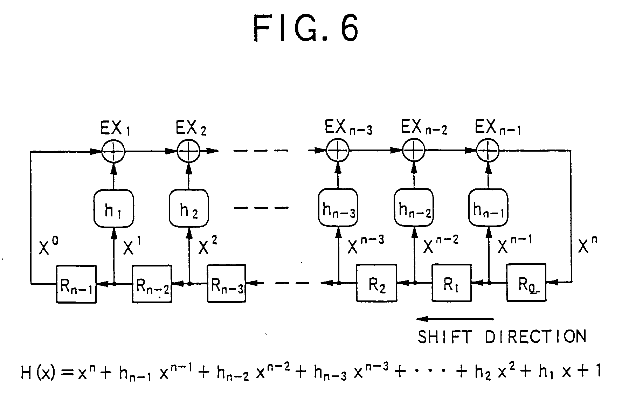

The present invention relates to a data recording method of scrambling data and recording the scrambled data on a recording medium (and a data reproduction method of reading the scrambled data from the recording medium and descrambling it in order to reproduce data), and particularly to a data recording method that performs scrambling based on random Sequences which has a maximum period generated in same shift resister stages, as explained about FIG.6 (hereinafter, referred to as Maximum-length sequences).

In recent years, DVD has spread and advanced as a kind of large-volume recording medium, and the Differential Phase Detection (DPD) method has been adopted for the tracking servo. This DPD method detects the diagonal partial sum of the light intensity distribution of a 4-division photo detector and generates a tracking signal based on the respective phase differences. Generally, when a track on a disk that is being tracked by the DPD method has the same bit pattern as the adjacent tracks, or in other words, when there is correlation of the bit patterns, it is not possible to obtain a correct tracking-error signal. Therefore, in order to obtain an accurate tracking servo for the DPD method, user data are scrambled at random and recorded on a disk such that adjacent tracks do no have identical bit patterns. At the time of scrambling, by using different scrambling methods for three adjacent tracks on the disk in order to remove any correlation among the bit patterns of each track, it is possible to avoid the aforementioned problem and obtain a proper tracking-error signal.

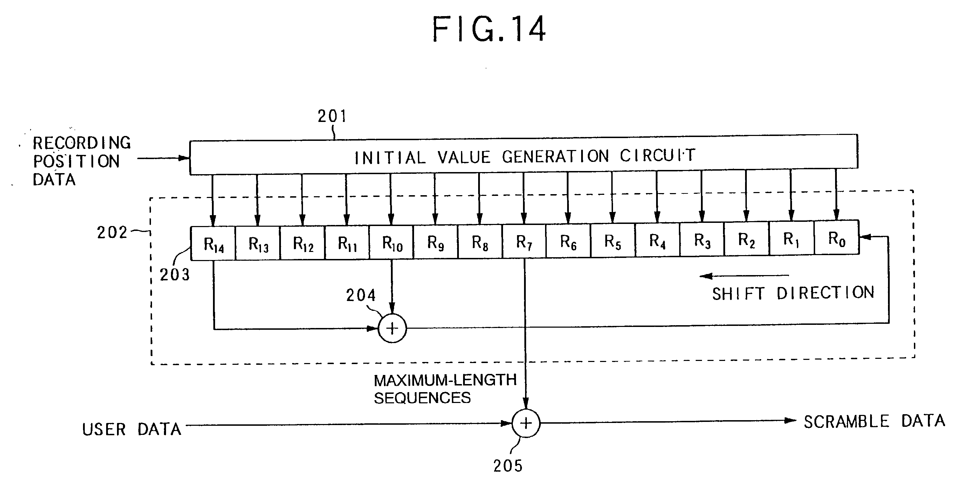

FIG. 14 is a block diagram showing the construction of the scramble circuit for performing the scrambling described above. The scramble circuit shown in FIG. 14 comprises an initial-value generator circuit 201, Maximum-length sequences generator circuit 202 having a shift register 203 and EXOR circuit 204, and an EXOR circuit 205. The Maximum-length sequences generator circuit 202 shown in FIG. 14 is an example of using a 15-stage ($R_0$ to $R_{14}$) shift register 203, where bits are shifted in the sequential shift direction from each stage, and the EXOR circuit 204 takes the exclusive OR of the bits output from specified stages (R10 and R14 in FIG. 14) of the shift register 203, and feeds it back to the initial stage $R_0$. By doing this, the Maximum-length sequences generator circuit 202 generates Maximum-length sequences that is random data having a period of $2^{15}$ - 1 (bits).

On the other hand, the initial-value generator circuit 201, prepares in advance a plurality of partial series that appear during the Maximum-length sequences period as initial values based on the data for the recording position on the disk, and from these values, sets an initial value, which is selected based on the data for the recording position on the disk, for the Maximum-length sequences generator circuit 202. The initial-value generator circuit 201 switches the initial value in this way, so it is possible to perform different scrambling according to the recording position. Also, the EXOR circuit 205 scrambles the user data by taking the exclusive OR of the bit output from a specified stage of the shift register 203 ($R_0$ in FIG. 14) and the user data, and outputs that data to the outside as scrambled data.

However, in a scramble circuit that is constructed as shown in FIG. 14, a certain amount of correlation among adjacent tracks on the disk is generated even when a plurality of scrambling methods are applied according to the recording position on the disk. In other words, for a pair of adjacent tracks on a disk, depending on the modulation method for the recording data, there is a high possibility that the same Maximum-length sequences pattern will be used for comparatively close positions on the disk, so it is difficult to completely remove any correlation by just switching among initial values of specific Maximum-length sequences.

On the other hand, by preparing a plurality of Maximum-length sequences in advance, which correspond to the plurality of scrambling methods, instead of switching among specified Maximum-length sequences initial values as shown in FIG. 14, it is possible to switch the Maximum-length sequences based on the data for the recording position on the disk. However, in this case, the construction required for generating a plurality of Maximum-length sequences becomes difficult and the size of the circuit becomes large.

In consideration of the problems described above, it is the objective of this invention to provide a data recording method and apparatus that generates a plurality of random series based on specific Maximum-length sequences and then selectively performs scrambling based on those random series such that there is no correlation among the recording positions, and such that highly reliable scrambling is possible with a small scale circuit.

The above object of the present invention can be achieved by the data recording method of the present invention of using random series to scramble input data and generate recording data. The method is provided with: a random series generation process of generating a pre-determined random series; a random series conversion process of selectively converting said random series to different random series based on recording position data; and a scrambling process of using said converted random series to scramble input data.

According to the present invention, when generating recording data, a fixed specific generated random series or Maximum-length sequences is selectively converted based on the recording position data, so it is possible to perform scrambling using different random series when the recording positions are close to each other. In addition, since only one of the Maximum-length sequences that were prepared in advance needs to be used, construction is simple, and it is possible to perform scrambling with higher reliability than when changing the initial value of the Maximum-length sequences.

In one aspect of the present invention, said random series conversion process converts said random series to different random series by performing interleaving on said random series by rearranging the bit order of the output bits of said random series based on said recording position data.

According to this aspect, when generating recording data, interleaving is performed based on recording position data for a fixed specific generated random series or Maximum-length sequences to rearrange the bit order, so it is possible to arbitrarily change the original Maximum-length sequences pattern and to easily and accurately convert the Maximum-length sequences.

In another aspect of the present invention, said random series conversion process converts said random series to different random series by inverting the bits of said random series according to an inverted pattern based on said recording position data.

According to this aspect, when generating recording data, bit inversion is performed according to an inverted pattern that is based on the recording position data for a fixed specifically generated random series or Maximum-length sequences, so it is possible to arbitrarily change the original Maximum-length sequences pattern and to easily and accurately convert the Maximum-length sequences.

In further aspect of the present invention, said random series conversion process performs interleaving on said random series by rearranging the bit order of the output bits of said random series based on said recording position data, and then performs a specified calculation on the interleave random series and delayed output of that random series and converts said random series to different random series based on the results of the performed calculation.

According to this aspect, the described delayed output of the random Maximum-length sequences that was interleaved as described above is obtained and calculation is performed, so it is possible to perform scrambling using a highly reliable random series having even more reduced correlation.

In further aspect of the present invention, said random series conversion process performs said interleaving on a 16-bit random series, then alternately selects and outputs the high-order 8 bits or low-order 8 bits.

According to this aspect, the original random Maximum-length sequences is configured with 16 bits, and the random series that was converted by interleaving is output by alternating the high-order 8 bits and low-order 8 bits, so it is possible to keep the original Maximum-length sequences as is and scramble the input data in 1-byte units, making it easier to handle the data.

In further aspect of the present invention, said recording data are recorded in order on tracks on a disk-shaped medium, and in said random series conversion process are converted to different random series for adjacent tracks.

According to this aspect, when recording the scrambled recording data on a disk-shaped recording medium, the scrambling process is performed as described above so it is possible to perform effective scrambling of data on a general-purpose recording medium, such as a DVD, and thus increase reliability.

The above object of the present invention can be achieved by the data recording apparatus of the present invention of using random series to scramble input data and generate recording data. The data recording apparatus is provided with:, a random series generation device of generating a pre-determined random series; a random series conversion device of selectively converting said random series to different random series based on recording position data; and a scrambling device of using said converted random series to scramble input data.

According to the present invention, when generating recording data, a fixed specific generated random series or Maximum-length sequences is selectively converted based on the recording position data, so it is possible to perform scrambling using different random series when the recording positions are close to each other. In addition, since only one of the Maximum-length sequences that were prepared in advance needs to be used, construction is simple, and it is possible to perform scrambling with higher reliability than when changing the initial value of the Maximum-length sequences.

In one aspect of the present invention, said random series conversion device includes an interleaving device of rearranging the order of the output bits of said random series based on said recording position data, and converts said random series to different random series by performing interleaving on said random series by said interleaving device.

According to this aspect, when generating recording data, interleaving is performed based on recording position data for a fixed specific generated random series or Maximum-length sequences to rearrange the bit order, so it is possible to arbitrarily change the original Maximum-length sequences pattern and to easily and accurately convert the Maximum-length sequences.

In another aspect of the present invention, said random series conversion device includes a bit inversion device of inverting bits according to an inverted pattern based on said recording position data, and converts said random series to different random series by inverting the bits of said random series by said bit inversion device.

According to this aspect, when generating recording data, bit inversion is performed according to an inverted pattern that is based on the recording position data for a fixed specifically generated random series or Maximum-length sequences, so it is possible to arbitrarily change the original Maximum-length sequences pattern and to easily and accurately convert the Maximum-length sequences.

In further aspect of the present invention, said random series conversion device includes an interleaving device of rearranging the order of the output bits of said random series based on said recording position data, a delay device of generating delayed output of the random series after interleaving has been performed, and a calculation device of performing a specified calculation on the random series that is interleaved by said interleaving device and the delayed output of said delay device, and performs conversion based on the calculation results.

According to this aspect, the described delayed output of the random Maximum-length sequences that was interleaved as described above is obtained and calculation is performed, so it is possible to perform scrambling using a highly reliable random series having even more reduced correlation.

In further aspect of the present invention, said random series conversion device includes a selective output device of alternately selecting the higher-order 8 bits or lower-order 8 bits after interleaving was performed on a 16-bit random series by said interleaving device.

According to this aspect, the original random Maximum-length sequences is configured with 16 bits, and the random series that was converted by interleaving is output by alternating the high-order 8 bits and low-order 8 bits, so it is possible to keep the original Maximum-length sequences as is and scramble the input data in 1-byte units, making it easier to handle the data.

In further aspect of the present invention, said recording data are recorded in order on the tracks of a disk-shaped recording medium, and said random series conversion device converts said random series to different random series for adjacent tracks.

According to this aspect, when recording the scrambled recording data on a disk-shaped recording medium, the scrambling process is performed as described above so it is possible to perform effective scrambling of data on a general-purpose recording medium, such as a DVD, and thus increase reliability.

The above object of the present invention can be achieved by the data recording method of the present invention for descrambling input data by using a random series which generates reproduction data by using the random series that were selected during scrambling to descramble said input data, which were scrambled by the data recording method.

According to the present invention, on the data reproduction side, it is possible to perform descrambling using the same construction as scrambling that is performed on the data recording side, where the random series that were selected during the scrambling process are determined, and the input data are descrambled with these Maximum-length sequences. Therefore, in a system of recording and reproducing data with this kind of combination of scrambling and descrambling, highly reliable processing is possible.

The above object of the present invention can be achieved by the data recording apparatus of the present invention for descrambling input data by using a random series which generates reproduction data by using the random series that were selected during scrambling to descramble said input data, which were scrambled by the data recording method.

According to the present invention, on the data reproduction side, it is possible to perform descrambling using the same construction as scrambling that is performed on the data recording side, where the random series that were selected during the scrambling process are determined, and the input data are descrambled with these Maximum-length sequences. Therefore, in a system of recording and reproducing data with this kind of combination of scrambling and descrambling, highly reliable processing is possible.

**IN THE DRAWINGS**

FIG. 1 is a block diagram of the major construction of a DVD recording apparatus used as the data recording apparatus of an embodiment of the present invention ;

FIG. 2 is a diagram showing the data configuration of a data frame ;

FIG. 3 is a diagram showing the data configuration of an ECC block ;.

FIG. 4 is a diagram showing the track configuration of a DVD disk used as the recording medium ;

FIG. 5 is a diagram showing the method of assigning scrambling corresponding to scramble Nos. 0 to 15 for each ECC block recorded on the tracks of the DVD disk ;

FIG. 6 is a diagram explaining the theory of a scrambling process that uses Maximum-length sequences ;

FIG. 7 is a block diagram showing a first example of the construction of a conversion circuit;

FIG. 8 is a diagram showing an example of the data configuration of the interleave pattern of an interleave circuit ;

FIG. 9 is a block diagram showing a second example of the construction of a conversion circuit ;

FIG. 10 is a diagram showing an example of the data configuration of the inverted pattern of the inverted-pattern-generation unit;

FIG. 11 is a block diagram showing a third example of the construction of a conversion circuit ;

FIG. 12 is a block diagram of an additional circuit that is more generalized than the additional circuit in the conversion circuit of the third example of construction ;

FIG. 13 is a block diagram showing an example of changes to the construction shown in FIG. 1 ; and

FIG. 14 is a block diagram showing the construction of a conventional scramble circuit.

The preferred embodiment of this invention will be explained with reference to the drawings. Here, an embodiment of using a data frame and ECC block configuration of DVD format is explained in which RLL (1, 7) modulation is used instead of 8/16 modulation for encoding, and where in the data recording method of recording data, the recording data are scrambled based on random Maximum-length sequences.

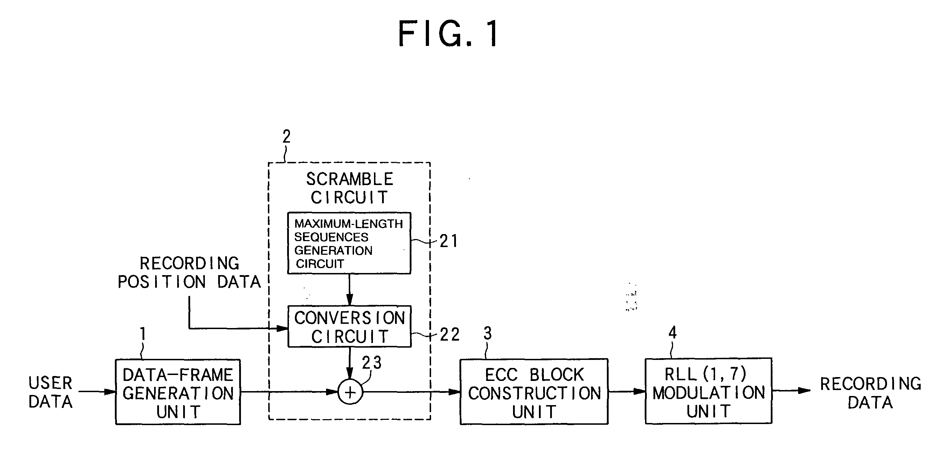

FIG. 1 is a block diagram of the major construction of a DVD recording apparatus used as the data recording apparatus of this embodiment of the present invention. The elements of the construction shown in FIG. 1 include a data frame generation unit 1, scramble circuit 2, ECC block construction unit 3, and RLL (1, 7) modulation unit 4. In addition, the scramble circuit 2 comprises Maximum-length sequences generation circuit 21, conversion circuit 22 and EXOR circuit 23.

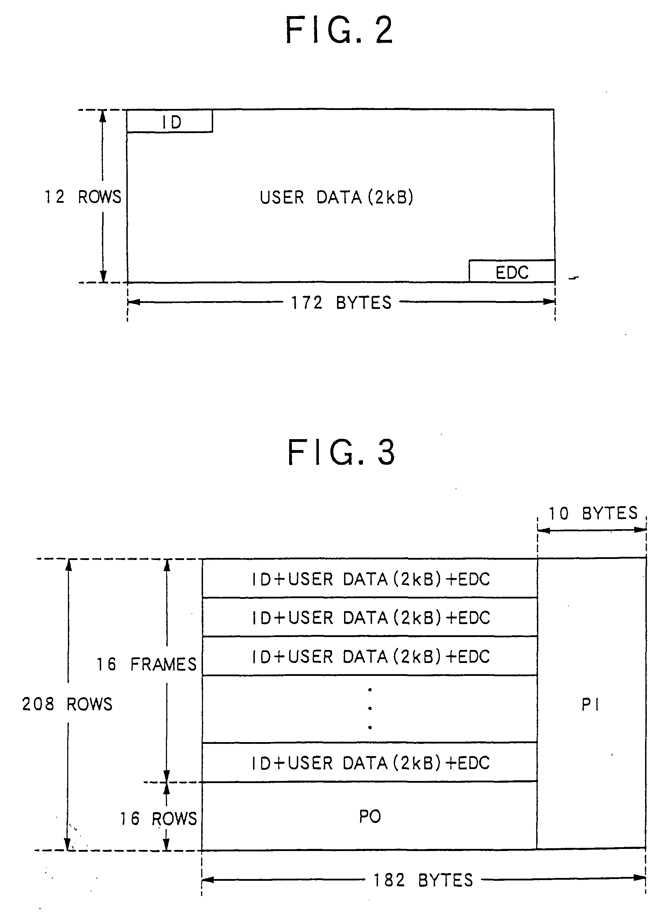

In FIG. 1, the user data that are input to the DVD recording apparatus are added in 2-kByte units to the ID (Identification Data) and EDC (Error Detection Code) by the data frame generation unit 1 to form a data frame. The data configuration used here is shown in FIG. 2. In FIG. 2, the 12-byte ID at the start of the data frame contains unique address data for the location on the disk, which is continuously increased. Also, the 4-byte EDC at the end of the data frame is specified code that is used in the error correction process. The user data are located between the ID and EDC to form a data frame having data configuration of 172 bytes x 12 rows.

Next, the scramble circuit 2 scrambles the data frame. First, the Maximum-length sequences generation circuit 21 generates Maximum-length sequences as the random series to be used in scrambling. Moreover, the conversion circuit 22 converts the Maximum-length sequences from the Maximum-length sequences generation circuit 21 as will be described later, and outputs different random series depending on the recording position data for the disk. When doing this, the Maximum-length sequences is converted by changing the order of the output bits of the Maximum-length sequences in the pattern based on the recording position data, and variations of random series are obtained according to just the type of recording position data. The construction and operation of the conversion circuit 22 will be described in detail later.

Next, the EXOR circuit 23 takes the exclusive OR of the user data in the data frame and Maximum-length sequences that was converted by the conversion circuit 22, and outputs the scrambled data frame. A detailed explanation of the construction and function of the scramble circuit 2 will be given later.

Next, in the ECC block construction unit 3, error correction code is added to the sixteen data frames that were scrambled as described above to form an ECC block. The data configuration of the ECC block is shown in FIG. 3. The error correction code (parity) shown in FIG. 3 is added to 172 bytes x 192 rows of data in which sixteen data frames, which have the data configuration shown in FIG. 2, have been arranged. In other words, a 16-byte PO (Outer-code Parity) is added to the 192 bytes in the vertical direction, and a 10-byte PI (Inner-code parity) is added to the 172 bytes in the horizontal direction. Overall, an ECC block that is 182 bytes x 208 rows is constructed.

Finally, in the RLL (1, 7) modulation unit 4, RLL (1, 7) modulation is performed on the ECC block. RLL (1, 7) modulation is a type of RLL (Run Length Limited Code), and in addition to being a method of modulating the 2-bit original code to 3-bit code, it is a recording method in which the minimum inversion interval during recording is limited to 2T (T is the channel-bit period) by NRZI (Non-Return to Zero Inverse), and the maximum inversion interval is limited to 8T. The RLL (1, 7) modulation method has various advantages in that by combining it with Viterbi decoding, it is possible to increase the linear recording density, simplify the modulator-demodulator circuit, and use a low-frequency channel clock.

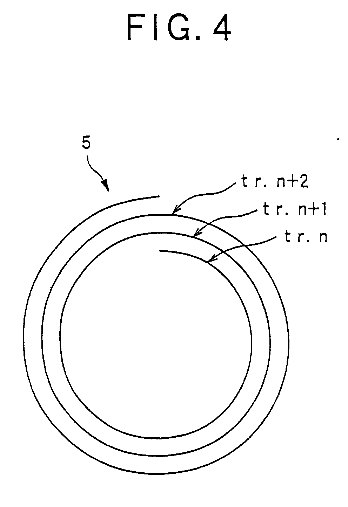

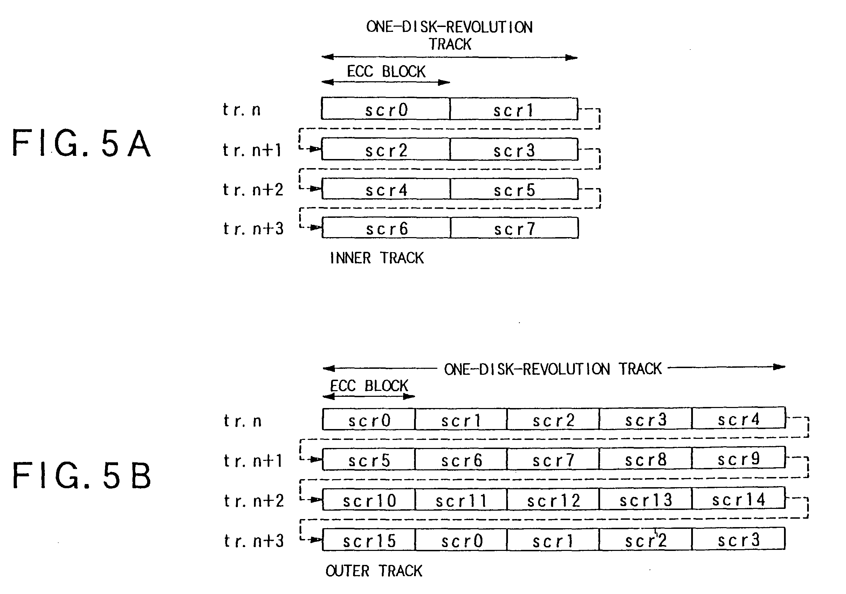

Next, FIG. 4 and FIG. 5 will be used to explain in detail the data recording method of this embodiment, which is the method of setting the sixteen scrambling methods that correspond to the disk position data as described above. FIG. 4 is a diagram showing the track configuration of a DVD disk 5 used as the recording medium. Spiral-shaped tracks are formed on the DVD disk 5 from the inside to the outside. In FIG. 4, track numbers are given to the tracks on the DVD disk 5 for each revolution of the disk starting from the inside (the three tracks in FIG. 4 are indicated by tr. n to tr.n+2). Moreover, FIG. 5 is a diagram showing the method of assigning scrambling corresponding to scramble No. 0 to 15 (indicated as scr0 to scr15 in FIG. 5) for each ECC block recorded on the tracks of the DVD disk 5.

For the DVD disk 5, the Constant Linear Velocity (CLV) method is adopted as the recording method for recording data at a constant linear speed. Therefore, as shown in FIG. 5, depending on the radius of the recording position of the DVD disk, the number of ECC blocks per one track circumference (one track number in FIG. 5) differs. With the arrangement shown in FIG. 5, when the sixteen scramble numbers are assigned in order to the ECC blocks, the same type of scrambling is not used for adjacent track pairs, as will be explained below.

To show the relationship between the position of the tracks on the DVD disk 5 and the ECC blocks, FIG. 5A shows an example near the inside of the disk, and FIG. 5B shows an example near the outside of the disk. In the case of FIG. 5A, two ECC blocks are located on one track, and in the case of FIG. 5B, five ECC blocks are located on one track. In either case, it can be seen that the scramble number never becomes the same between the adjacent three tracks n to n+2. Generally, as a condition that different scramble numbers are set for pairs of adjacent tracks, of the sixteen scramble numbers, there must be one or more ECC block located on each track, and there must be 15 ECC blocks or less located on every two tracks (7.5 blocks per track or less).

Here, the number of ECC blocks per track in the DVD format is approximately 1.8 blocks for the inner most track of the DVD disk 5 and approximately 4.4 blocks for the outer most track of the DVD 5. By satisfying the aforementioned conditions, it is possible to always set different scramble numbers from among the sixteen scramble numbers for three adjacent tracks.

Next, FIG. 6 will be used to explain the theory of the scrambling process that uses the Maximum-length sequences. Generally, in order to generate Maximum-length sequences with a circuit, a multi-stage linear feedback shift register can be constructed. In other words, as shown in FIG. 6, the circuit can be constructed by arranging an n-stage shift register indicated by $R_0$ to $R_{n-1}$, coefficients $h_1$ to $h_{n-1}$ that correspond to the amount of feedback of each stage, and exclusive OR EX1 to EXn-a. Here, various Maximum-length sequences are possible by adequately setting coefficients $h_0$ to $h_{n-1}$ to the output bits ($x^1$ to $x^{n-1}$) of each stage of the shift register. The construction shown in FIG. 6 can be expressed by the following polynomial H(x).

$$H(x) = x^n + h_{n-1}x^{n-1} - h_{n-2}x^{n-2} + ... + h_2x^2 - h_1x^1 + 1 \qquad (1)$$

The polynomial H(x) given in Equation (1) is selected as the primitive polynomial, and by performing calculation based on this, it is possible to generate Maximum-length sequences. The Maximum-length sequences expressed by an n-degree polynomial H(x) has a period $2^n - 1$, and identical data are not repeated in the series output during this period.

As the method of setting the coefficients $h_0$ to $h_{n-1}$ shown in FIG. 6, by making the feedback bit 1 and the non-feedback bit 0, for example, it is possible to set various Maximum-length sequences with this combination. The output series of the Maximum-length sequences can be obtained from any of the stages $R_0$ to $R_{n-1}$, and can be obtained also as parallel data in addition to serial data. Here, user data on the DVD disk 5 is handled in 2-kByte units, so the case of Maximum-length sequences with a 2-kByte period that corresponds to scrambling of user data will be explained. In this case, Maximum-length sequences generation circuit 21 is constructed that uses Maximum-length sequences that correspond to the 14-degree primitive polynomial of Equation (1) to give a period of approximately 2 Kbytes ($2^{14-1} = 2047$). However, in this embodiment, there is a conversion circuit 22, so it is possible to use Maximum-length sequences with a shorter period.

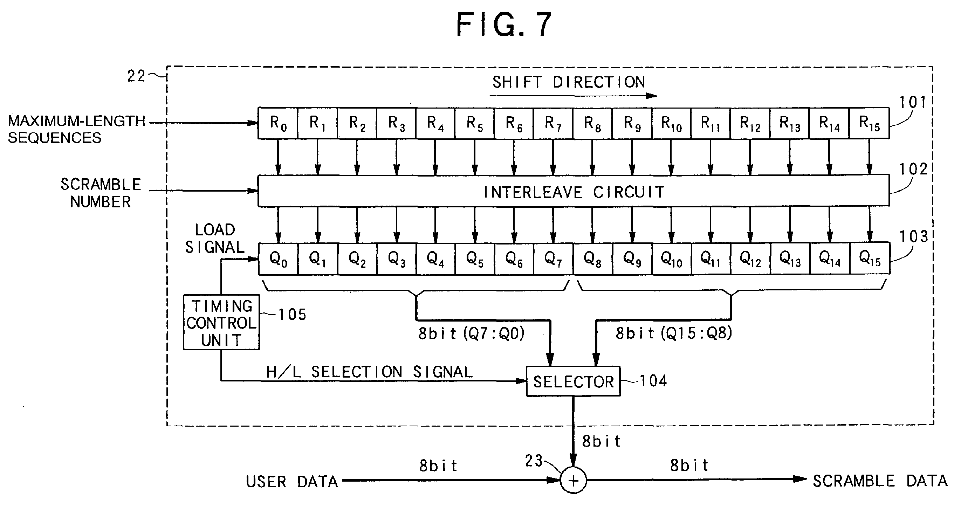

Next, FIG. 7 is a block diagram showing a first example of the construction of the conversion circuit 22 of this embodiment. The first example that is shown in FIG. 7 is a conversion circuit 22 that comprises a 16-stage shift register 101, an interleave circuit 102, a flip-flop 103, a selector 104 and a timing-control unit 105.

In FIG. 7, the shift register 101 has 16 stages that are indicated as $R_0$ to $R_{15}$, and the Maximum-length sequences that was output from the Maximum-length sequences generation circuit 21 is input as serial data for every 1 bit, and the shift register 101 shifts the bits in order in the shift direction shown by the arrow (from $R_0$ toward $R_{15}$). In addition, the shift register 101 outputs the 1-bit parallel data, which is made up from the output bits from each stage $R_0$ to $R_{15}$ of the shift register 101, to the interleave circuit 102.

The interleave circuit 102 rearranges the order of the bits that are output from the stages $R_0$ to $R_{15}$ of the shift register each time a 16-bit shift is performed by the shift register 101, and then outputs the interleaved 16 output bits to the stages $Q_0$ to $Q_{15}$ of the flip-flop 103. In other words, Maximum-length sequences that are input to the shift register are converted to different random series by the interleave circuit 102. When doing this, it is possible to set a plurality of interleave patterns for the interleave circuit 102 (for example, constructing a data table in the memory), and specific interleave patterns are selected that correspond to the scramble numbers that are determined according to the recording position data.

The relationship between the interleave pattern in the interleave circuit 102 and the scramble number will be explained here. The interleave circuit 102 performs interleaving according to the following equation between the ith output bit ai from the shift register 101 and the kth output bit bk from the interleave circuit 102.

$$bk = aj$$

$$j = [Sn + (Sn \times 2 + 1) \times k \times (k + 1)/2] \bmod 16 \qquad (2)$$

where:

Sn: Scramble number
Mod16: Finds Modulo 16.

Interleaving is performed for the Maximum-length sequences by performing the calculation of Equation (2) for each of the output bits j = 1 to 16. Also, since calculation of Equation (2) changes for different scramble numbers, different interleave patterns are obtained.

Next, the flip-flop 103 has 16 stages that are indicated by $Q_0$ to $Q_{15}$, and parallel data are input from the interleave circuit 102 and held in each of these stages $Q_0$ to $Q_{15}$. The timing-control unit 105 supplies a load signal to the flip-flop 103, and when this signal is received, the output bits that are held in the stages $Q_0$ to $Q_{15}$ are output to the selector 104 8 bits at a time as will be explained later.

The selector 104 divides the 16-bit parallel data that are output from the flip-flop 103 into 8 high-order bits and 8 low-order bits, and outputs one or the other in 1-byte units. The timing-control unit 105 supplies a H/L selection signal to the selector 104 for switching the order of the 8 high-order bits and 8 low-order bits of the output data from the selector 104 according to the H/L selection signal.

The timing-control unit 105 generates a load signal and the H/L selection signal mentioned above according to a reference clock. When doing this, the timing-control unit 105 counts the number of bits of the Maximum-length sequences input to the shift register 101, and changes the pattern for the load signal every 16 bits, and for the H/L selection signal every 8 bits.

The Maximum-length sequences is converted by the conversion circuit 22 in this way, and the 8-bit output data are output from the selector 104 to the EXOR circuit 23. The EXOR circuit 23, scrambles the user data by a random series after conversion, as described above, and outputs the scrambled data.

In the EXOR circuit 23 shown in FIG. 7, processing is performed in 1-byte (8 bits) units, and the output data and user data from the selector 104 are input as 8-bit wide parallel data. However, this construction is not necessary and construction in which the output bits from each stage $Q_0$ to $Q_{15}$ of the flip-flop 103 are supplied one bit at a time to the EXOR circuit 23 as serial data, and calculation is performed with the user data in 1-bit units is also possible. Moreover, construction in which all of the output bits from each stage $Q_0$ to $Q_{15}$ of the flip-flop 103 are supplied at one time to the EXOR circuit 23, and calculation is performed in the EXOR circuit 23 for pairs of 16-bit wide parallel data is also possible.

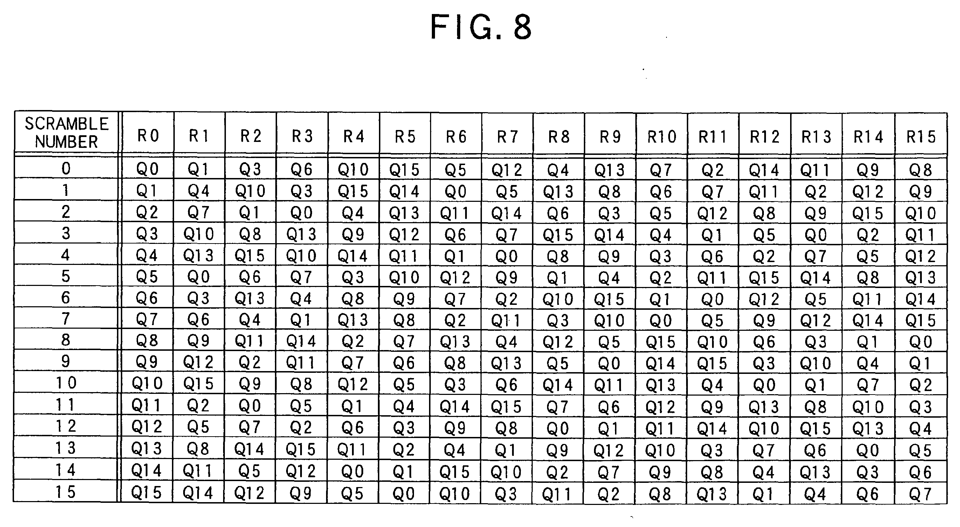

FIG. 8 is a diagram showing an example of the data configuration of the interleave pattern of the interleave circuit 102. The interleave pattern shown in FIG. 8 contains the connection relationship for the output bits from the stages $R_0$ to $R_{15}$ of the shift register 101 on the input side and for the stages $Q_0$ to $Q_{15}$ of the flip-flop 103 on the output side as setting data. In addition, it contains 16 setting data items for the scramble numbers 0 to 15, and since a different connection relationship is set for each, it is possible to selectively generate 16 different random series from the input Maximum-length sequences.

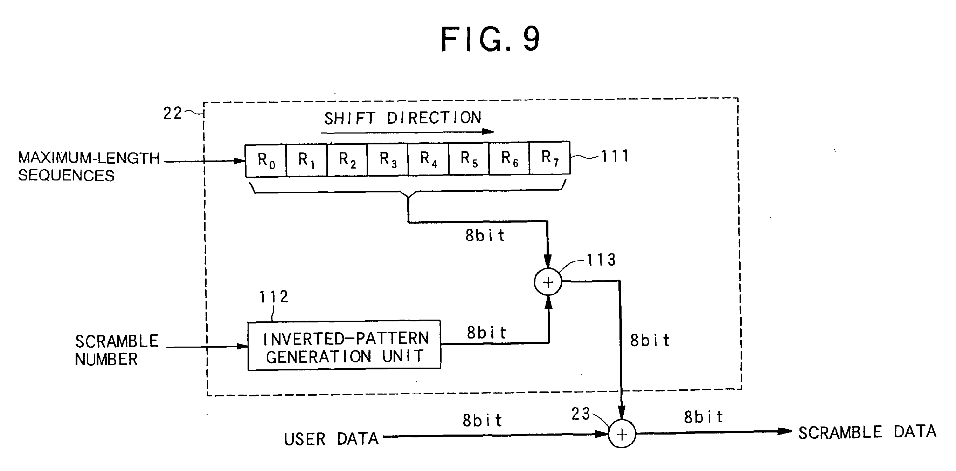

FIG. 9 is a block diagram showing a second example of the construction of the conversion circuit 22 of this embodiment. The conversion circuit 22 of the second example shown in FIG. 9 comprises an 8-stage shift register 111, inverted-pattern generation unit 112 and EXOR circuit 113.

In FIG. 9, the shift register 111 has 8 stages that are indicated as $R_0$ to $R_7$, and it shifts the bits of the Maximum-length sequences, which was output from the Maximum-length sequences generation circuit 21 and inputs one bit at a time as serial data, in order in the shift direction shown by the arrow (direction from $R_0$ to $R_7$). Then, it outputs the 8-bit parallel data, which is formed from the output bits of the stages $R_0$ to $R_7$ of the shift register 111, to the EXOR circuit 113.

The inverted-pattern generation unit 112 generates an 8-bit inverted pattern for inverting the output bits from the stages $R_0$ to $R_7$ of the shift register 111, and outputs the inverted pattern to the EXOR circuit 113. For example, the inverted pattern is constructed such that of the output bits, the bits to be inverted are '1' and the bits not to be inverted are '0'. At this time it is possible for the inverted-pattern generation unit 112 to generate a plurality of inverted patterns and select specified inverted patterns to match the aforementioned scramble numbers.

The EXOR circuit 113 takes the exclusive OR of the 8-bit parallel data from the shift register 111 and the 8-bit inverted data from the inverted-pattern generation unit 112, and generates 8-bit output data of which the bit pattern of the stages $R_0$ to $R_7$ of the shift register 111 is inverted.

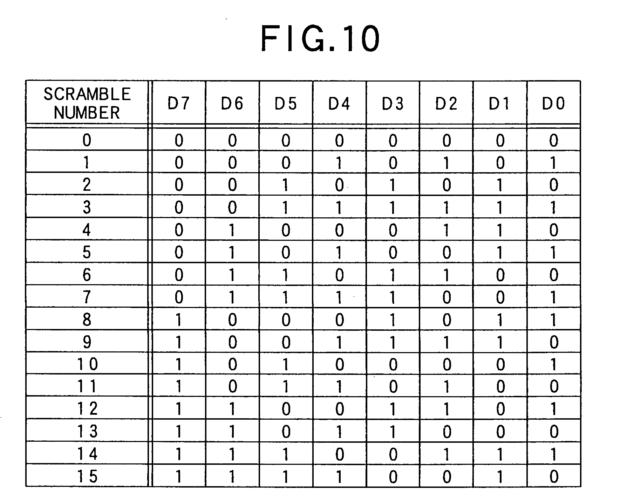

FIG. 10 is a diagram showing an example of the data configuration of the inverted pattern of the inverted-pattern-generation unit 112. The inverted pattern shown in FIG. 10 contains 16 setting data items for scramble numbers 0 to 15. The setting data for each scramble number are each a different inverted pattern, so it is possible to selectively generate 16 different random series from the input Maximum-length sequences.

Taking into consideration conformity with the first example of construction shown in FIG. 7, the construction of the second example shown in FIG. 9 is such that the Maximum-length sequences that is input from the Maximum-length sequences generation circuit 22 as serial data is converted to 8-bit parallel data. However, the construction is not limited to this, and construction in which the Maximum-length sequences from the Maximum-length sequences generation circuit 21 is obtained as 8-bit parallel data is also possible. Moreover, similar to the example shown in FIG. 7, in the case of the example shown in FIG. 9, calculation is not limited to 1-byte units, and can be performed using a suitable data width such as 1-bit or 2-bytes.

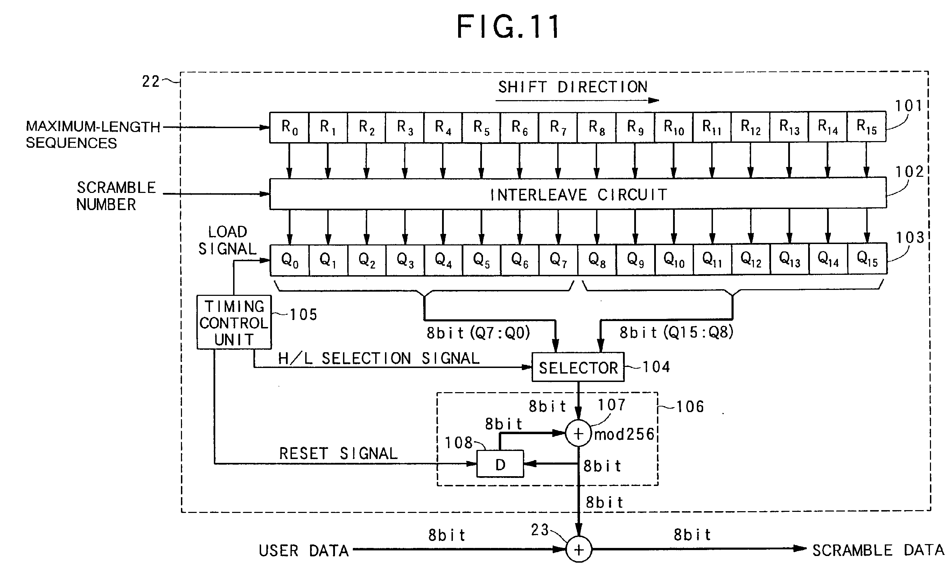

Next, FIG. 11 is a block diagram showing a third example of the construction of the conversion circuit 22 of this embodiment. The conversion circuit 22 of the third example of construction shown in FIG. 11, comprises an additional circuit 106 for reducing the correlation among Maximum-length sequences in addition to a shift register 101, interleave circuit 102, flip-flop 103, selector 104 and timing-control unit 105, which are similar to those shown in FIG. 7.

As shown in FIG. 11, the additional circuit 106 in the third example of construction comprises a mod256 adding circuit 107 and delay element 108. In this construction, the mod256 adding circuit 107 performs mod256 addition (adds and finds Modulo 256) of the high-order bits or low-order bits that are output from the selector 104 and the 8 bits that are output from the delay element 108, and outputs the resulting 8-bit output data to the EXOR circuit 23. On the other hand, the output data from the mod256 adding circuit 107 is held by the delay element 108 and used for the next calculation. The delay element 108 is not set at the beginning of scrambling, so the timing-control unit 105 supplies a reset signal to the delay element 108 at the start of scrambling and resets the held data.

By using the additional circuit 106 shown in FIG. 11 in this way, changes in the random series that are based on the function of the interleave circuit 102 affect the generation of the random series from the delay element 108, so changes in the random series become larger. In other words, the correlation between random series that are close to each other time wise is reduced. Therefore, in comparison with the first example of construction shown in FIG. 9, the third example shown in FIG. 11 uses a random series with lower correlation, so it is possible to perform more reliable scrambling.

Also, in the third example of construction shown in FIG. 11, processing is not limited to 1-byte units, so construction in which processing is performed using a suitable data width, such as 1 bit or 2 bytes, is possible. In this case, when the data width is 1 bit, the mod256 adding circuit 107 of the additional circuit 106 performs exclusive OR calculation, and when the data width is n bits, it performs addition and finds Modulo $2^n$.

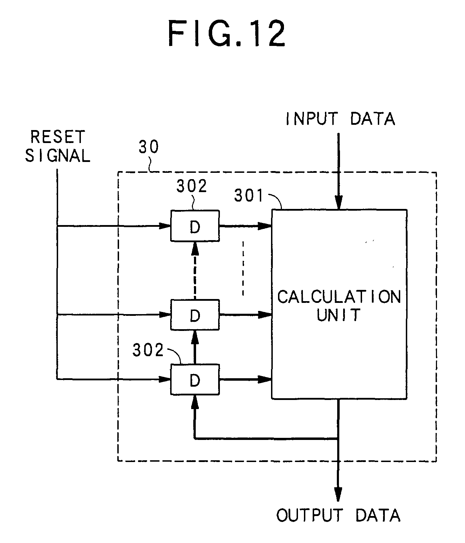

Next, FIG. 12 is a block diagram of an additional circuit that is more generalized than the additional circuit 106 of the conversion circuit 22 in the third example of construction. As shown in FIG. 12, this generalized additional circuit 30 comprises a calculation unit 301 and a plurality of delay elements 302. The calculation unit 301 is not limited to mod256 addition as described above, and in addition to calculating the exclusive OR between the input data and past calculation results it performs various calculations. Moreover, the plurality of delay elements 302 hold the past calculation results from the calculation unit 301 for a specified period of time. By performing calculation using the input data and past calculation results in this way, the calculation unit 301 affects the generation of random series and is very effective in reducing the correlation between converted random series.

Taking into consideration conformity with the first example of construction shown in FIG. 7, the construction of the third as well is such that the Maximum-length sequences that are input from the Maximum-length sequences generation circuit 21 as serial data are converted to 8-bit parallel data. However, the construction is not limited to this, and construction in which the Maximum-length sequences from the Maximum-length sequences generation circuit 21 is obtained as 8-bit parallel data is also possible. Moreover, similar to the example shown in FIG. 7, in the case of the example shown in FIG. 11, calculation is not limited to 1-byte units, and can be performed using a suitable data width such as 1-bit or 2-bytes.

A first, second and third example of construction have been explained, however it is also possible to use combinations of these examples. For example, it is possible to perform conversion according to the construction shown in FIG. 9 on the random series that have been already converted by the construction shown in FIG. 7. Also, in contrast, it is possible to perform conversion according to the construction shown in FIG. 7 on the random series that have already been converted by the construction shown in FIG. 9. Furthermore, the additional circuit 106 in the third example of construction, or the more generalized additional circuit 30 shown in FIG. 12, which is combined with the third example of construction, can be used in combination with the first example of construction.

With the embodiment of the present invention described above, a plurality of different random series are generated based on specified Maximum-length sequences that is set in advance, and scrambling is performed by using the different random series that correspond to recording positions on the DVD disk 5. Therefore, highly reliable scrambling with low correlation between adjacent tracks on the DVD disk 5 is possible. As a result, it is possible to obtain an accurate tracking-error signal even when using a tracking servo according to the DPD method. With the construction of this embodiment, only one Maximum-length sequences needs to be prepared in advance so it is not necessary to greatly increase the size of the circuitry.

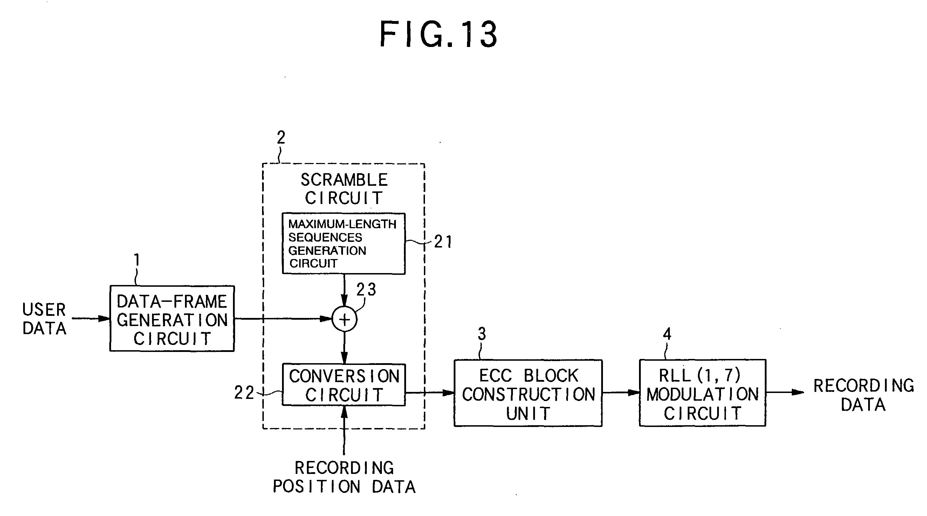

In the embodiment described above, the major construction shown in FIG. 1 can be changed as shown in FIG. 13. In other words, in the scramble circuit 2 in FIG. 13, after the Maximum-length sequences generation circuit 21 generates an Maximum-length sequences, the EXOR circuit 23 takes the exclusive OR with the user data, then the calculation results are converted by the conversion circuit 22 and the output data are output to the ECC block construction unit 3. This kind of construction also makes it possible to scramble the user data in the same way as scrambling by the construction shown in FIG. 1.

Also, in this embodiment, applying the present invention to a data recording method of recording data using a DVD formatted data frame and ECC block construction, and using an RLL (1, 7) modulation method instead of 8/16 modulation was explained, however it is also possible to apply the present invention to other formats as long as scrambling is performed based on Maximum-length sequences.

Moreover, in this embodiment, applying the present invention to a data recording method that performs scrambling was explained, however, by using the same construction, it is also possible to apply the present invention to a data reproduction method that performs descrambling. When performing descrambling that corresponds to the construction shown in FIG. 13, the interleave circuit 102 shown in FIG. 7 must have a de-interleave circuit that returns the order of the output bits to the original order.

**Claims**

1. A data recording method of using random series to scramble input data and generate recording data, **characterized in that** the method comprises:

   a random series generation process (21) of generating a pre-determined random series;
   a random series conversion process (22) of selectively converting said random series to different random series based on recording position data; and
   a scrambling process (23) of using said converted random series to scramble input data.

2. The data recording method according to claim 1, wherein said random series conversion process (22) converts said random series to different random series by performing interleaving on said random series by rearranging the bit order of the output bits of said random series based on said recording position data.

3. The data recording method according to claim 1, wherein said random series conversion process (22) converts said random series to different random series by inverting the bits of said random series according to an inverted pattern based on said recording position data.

4. The data recording method according to claim 1, wherein said random series conversion process (22) performs interleaving on said random series by rearranging the bit order of the output bits of said random series based on said recording position data, and then performs a specified calculation on the interleave random series and delayed output of that random series and converts said random series to different random series based on the results of the performed calculation.

5. The data recording method according to claim 2 or claim 4, wherein said random series conversion process (22) performs said interleaving on a 16-bit random series, then alternately selects and outputs the high-order 8 bits or low-order 8 bits.

6. The data recording method of any one of claims 1 to 5, wherein said recording data are recorded in order on tracks on a disk-shaped medium, and in said random series conversion process (22) are converted to different random series for adjacent tracks.

7. A data recording apparatus (2) that uses random series to scramble input data and generate recording data, **characterized in that** the apparatus comprises:

   a random series generation device (21) of generating a pre-determined random series;
   a random series conversion device (22) of selectively converting said random series to different random series based on recording position data; and
   a scrambling device (23) of using said converted random series to scramble input data.

8. The data recording apparatus (2) according to claim 7, wherein said random series conversion device (22) includes an interleaving device (102) of rearranging the order of the output bits of said random series based on said recording position data, and converts said random series to different random series by performing interleaving on said random series by said interleaving device (102).

**9.** The data recording apparatus (2) according to claim 7, wherein said random series conversion device (22) includes a bit inversion device (112) of inverting bits according to an inverted pattern based on said recording position data, and converts said random series to different random series by inverting the bits of said random series by said bit inversion device (112).

**10.** The data recording apparatus (2) according to claim 7, wherein said random series conversion device (22) includes an interleaving device (102) of rearranging the order of the output bits of said random series based on said recording position data, a delay device (108) of generating delayed output of the random series after interleaving has been performed, and a calculation device (107) of performing a specified calculation on the random series that is interleaved by said interleaving device (102) and the delayed output of said delay means, and performs conversion based on the calculation results.

**11.** The data recording apparatus (2) according to claim 8 or 10, wherein said random series conversion device (22) includes a selective output device (104) of alternately selecting the higher-order 8 bits or lower-order 8 bits after interleaving was performed on a 16-bit random series by said interleaving device (102).

**12.** The data recording apparatus (2) according to any one of the claims 7 to 11, wherein said recording data are recorded in order on the tracks of a disk-shaped recording medium, and said random series conversion device (22) converts said random series to different random series for adjacent tracks.

**13.** A data reproduction method for descrambling input data by using a random series which;
generates reproduction data by using the random series that were selected during scrambling to descramble said input data, which were scrambled by any of the data recording methods according to any one of claims 1 to 6.

**14.** A data reproduction apparatus for descrambling input data by using a random series which;
generates reproduction data by using the random series that were selected during scrambling to descramble said input data, which were scrambled by any of the data recording methods according to any one of claims 1 to 6.

# FIG. 1

EP 1 211 682 A2

# FIG. 2

| | |
|---|---|
| 12 ROWS | ID<br><br>USER DATA (2kB)<br><br>EDC |

172 BYTES

# FIG. 3

10 BYTES

| | | |
|---|---|---|
| 208 ROWS | 16 FRAMES | ID+USER DATA (2kB)+EDC |
| | | ID+USER DATA (2kB)+EDC |
| | | ID+USER DATA (2kB)+EDC |
| | | ⋮ |
| | | ID+USER DATA (2kB)+EDC |
| | 16 ROWS | PO |

PI

182 BYTES

# FIG. 4

5

t r. n+2

t r. n+1

t r. n

FIG. 5 A

ONE-DISK-REVOLUTION
TRACK

ECC BLOCK

tr. n    | scr0 | scr1 |

tr. n+1  | scr2 | scr3 |

tr. n+2  | scr4 | scr5 |

tr. n+3  | scr6 | scr7 |

INNER TRACK

FIG. 5 B

ONE-DISK-REVOLUTION TRACK

ECC BLOCK

tr. n    | scr0 | scr1 | scr2 | scr3 | scr4 |

tr. n+1  | scr5 | scr6 | scr7 | scr8 | scr9 |

tr. n+2  | scr10 | scr11 | scr12 | scr13 | scr14 |

tr. n+3  | scr15 | scr0 | scr1 | scr2 | scr3 |

OUTER TRACK

# FIG. 6

$$H(x) = x^n + h_{n-1} x^{n-1} + h_{n-2} x^{n-2} + h_{n-3} x^{n-3} + \cdots + h_2 x^2 + h_1 x + 1$$

# FIG. 7

SHIFT DIRECTION

MAXIMUM-LENGTH SEQUENCES — 101 — $R_0$ $R_1$ $R_2$ $R_3$ $R_4$ $R_5$ $R_6$ $R_7$ $R_8$ $R_9$ $R_{10}$ $R_{11}$ $R_{12}$ $R_{13}$ $R_{14}$ $R_{15}$

SCRAMBLE NUMBER — 102 — INTERLEAVE CIRCUIT

103 — $Q_0$ $Q_1$ $Q_2$ $Q_3$ $Q_4$ $Q_5$ $Q_6$ $Q_7$ $Q_8$ $Q_9$ $Q_{10}$ $Q_{11}$ $Q_{12}$ $Q_{13}$ $Q_{14}$ $Q_{15}$

8bit (Q15:Q8)

8bit (Q7:Q0)

LOAD SIGNAL

TIMING CONTROL UNIT — 105

H/L SELECTION SIGNAL

SELECTOR — 104

8bit

8bit

23

USER DATA

8bit

SCRAMBLE DATA

22

# FIG. 8

| SCRAMBLE NUMBER | R0 | R1 | R2 | R3 | R4 | R5 | R6 | R7 | R8 | R9 | R10 | R11 | R12 | R13 | R14 | R15 |
|---|---|---|---|---|---|---|---|---|---|---|---|---|---|---|---|---|
| 0 | Q0 | Q1 | Q3 | Q6 | Q10 | Q15 | Q5 | Q12 | Q4 | Q13 | Q7 | Q2 | Q14 | Q11 | Q9 | Q8 |
| 1 | Q1 | Q4 | Q10 | Q3 | Q15 | Q14 | Q0 | Q5 | Q13 | Q8 | Q6 | Q7 | Q11 | Q2 | Q12 | Q9 |
| 2 | Q2 | Q7 | Q1 | Q0 | Q4 | Q13 | Q11 | Q14 | Q6 | Q3 | Q5 | Q12 | Q8 | Q9 | Q15 | Q10 |
| 3 | Q3 | Q10 | Q8 | Q13 | Q9 | Q12 | Q6 | Q7 | Q15 | Q14 | Q4 | Q1 | Q5 | Q0 | Q2 | Q11 |
| 4 | Q4 | Q13 | Q15 | Q10 | Q14 | Q11 | Q1 | Q0 | Q8 | Q9 | Q3 | Q6 | Q2 | Q7 | Q5 | Q12 |
| 5 | Q5 | Q0 | Q6 | Q7 | Q3 | Q10 | Q12 | Q9 | Q1 | Q4 | Q2 | Q11 | Q15 | Q14 | Q8 | Q13 |
| 6 | Q6 | Q3 | Q13 | Q4 | Q8 | Q9 | Q7 | Q2 | Q10 | Q15 | Q1 | Q0 | Q12 | Q5 | Q11 | Q14 |
| 7 | Q7 | Q6 | Q4 | Q1 | Q13 | Q8 | Q2 | Q11 | Q3 | Q10 | Q0 | Q5 | Q9 | Q12 | Q14 | Q15 |
| 8 | Q8 | Q9 | Q11 | Q14 | Q2 | Q7 | Q13 | Q4 | Q12 | Q5 | Q15 | Q10 | Q6 | Q3 | Q1 | Q0 |
| 9 | Q9 | Q12 | Q2 | Q11 | Q7 | Q6 | Q8 | Q13 | Q5 | Q0 | Q14 | Q15 | Q3 | Q10 | Q4 | Q1 |
| 10 | Q10 | Q15 | Q9 | Q8 | Q12 | Q5 | Q3 | Q6 | Q14 | Q11 | Q13 | Q4 | Q0 | Q1 | Q7 | Q2 |
| 11 | Q11 | Q2 | Q0 | Q5 | Q1 | Q4 | Q14 | Q15 | Q7 | Q6 | Q12 | Q9 | Q13 | Q8 | Q10 | Q3 |
| 12 | Q12 | Q5 | Q7 | Q2 | Q6 | Q3 | Q9 | Q8 | Q0 | Q1 | Q11 | Q14 | Q10 | Q15 | Q13 | Q4 |
| 13 | Q13 | Q8 | Q14 | Q15 | Q11 | Q2 | Q4 | Q1 | Q9 | Q12 | Q10 | Q3 | Q7 | Q6 | Q0 | Q5 |
| 14 | Q14 | Q11 | Q5 | Q12 | Q0 | Q1 | Q15 | Q10 | Q2 | Q7 | Q9 | Q8 | Q4 | Q13 | Q3 | Q6 |
| 15 | Q15 | Q14 | Q12 | Q9 | Q5 | Q0 | Q10 | Q3 | Q11 | Q2 | Q8 | Q13 | Q1 | Q4 | Q6 | Q7 |

## FIG. 9

# FIG.10

| SCRAMBLE NUMBER | D7 | D6 | D5 | D4 | D3 | D2 | D1 | D0 |
|---|---|---|---|---|---|---|---|---|
| 0 | 0 | 0 | 0 | 0 | 0 | 0 | 0 | 0 |
| 1 | 0 | 0 | 0 | 1 | 0 | 1 | 0 | 1 |
| 2 | 0 | 0 | 1 | 0 | 1 | 0 | 1 | 0 |
| 3 | 0 | 0 | 1 | 1 | 1 | 1 | 1 | 1 |
| 4 | 0 | 1 | 0 | 0 | 0 | 1 | 1 | 0 |
| 5 | 0 | 1 | 0 | 1 | 0 | 0 | 1 | 1 |
| 6 | 0 | 1 | 1 | 0 | 1 | 1 | 0 | 0 |
| 7 | 0 | 1 | 1 | 1 | 1 | 0 | 0 | 1 |
| 8 | 1 | 0 | 0 | 0 | 1 | 0 | 1 | 1 |
| 9 | 1 | 0 | 0 | 1 | 1 | 1 | 1 | 0 |
| 10 | 1 | 0 | 1 | 0 | 0 | 0 | 0 | 1 |
| 11 | 1 | 0 | 1 | 1 | 0 | 1 | 0 | 0 |
| 12 | 1 | 1 | 0 | 0 | 1 | 1 | 0 | 1 |
| 13 | 1 | 1 | 0 | 1 | 1 | 0 | 0 | 0 |
| 14 | 1 | 1 | 1 | 0 | 0 | 1 | 1 | 1 |
| 15 | 1 | 1 | 1 | 1 | 0 | 0 | 1 | 0 |

EP 1 211 682 A2

# FIG.11

SHIFT DIRECTION →

MAXIMUM-LENGTH SEQUENCES

| $R_0$ | $R_1$ | $R_2$ | $R_3$ | $R_4$ | $R_5$ | $R_6$ | $R_7$ | $R_8$ | $R_9$ | $R_{10}$ | $R_{11}$ | $R_{12}$ | $R_{13}$ | $R_{14}$ | $R_{15}$ |

101

SCRAMBLE NUMBER

INTERLEAVE CIRCUIT

102

LOAD SIGNAL

| $Q_0$ | $Q_1$ | $Q_2$ | $Q_3$ | $Q_4$ | $Q_5$ | $Q_6$ | $Q_7$ | $Q_8$ | $Q_9$ | $Q_{10}$ | $Q_{11}$ | $Q_{12}$ | $Q_{13}$ | $Q_{14}$ | $Q_{15}$ |

103

TIMING CONTROL UNIT — 105

8bit (Q7:Q0)       8bit (Q15:Q8)

H/L SELECTION SIGNAL

SELECTOR — 104

8bit      107     — 106

8bit

+ mod256

108

RESET SIGNAL        D

8bit

8bit

22

USER DATA — 8bit — 23 + 8bit → SCRAMBLE DATA

EP 1 211 682 A2

# FIG.12

RESET
SIGNAL

30

302

301

INPUT DATA

D

D

302

D

CALCULATION
UNIT

OUTPUT DATA

# FIG.13

EP 1 211 682 A2

# FIG.14

INITIAL VALUE GENERATION CIRCUIT — 201

RECORDING POSITION DATA

202 —

203

| $R_{14}$ | $R_{13}$ | $R_{12}$ | $R_{11}$ | $R_{10}$ | $R_9$ | $R_8$ | $R_7$ | $R_6$ | $R_5$ | $R_4$ | $R_3$ | $R_2$ | $R_1$ | $R_0$ |

SHIFT DIRECTION

204

MAXIMUM-LENGTH SEQUENCES

USER DATA

SCRAMBLE DATA

205

EP 1 211 682 A2